# EUROPEAN PATENT SPECIFICATION

(11) **EP 0 755 195 B1**
(45) Date of publication and mention of the grant of the patent: **10.11.1999**
(21) Application number: 95915161.4
(22) Date of filing: 25.03.1995
(51) Int. Cl.: A23K 1/00

(54) **METHOD FOR PRODUCING ANIMAL FEED OF HIGHER NUTRITIVE VALUE, AND THE USE OF THE ANIMAL FEED THUS PRODUCED**
TIERFUTTER MIT VERBESSERTEM NUTRITIVEM WERT
PROCEDE DE PRODUCTION D'ALIMENTS POUR ANIMAUX A VALEUR NUTRITIVE SUPERIEURE, ET UTILISATION DES ALIMENTS AINSI PRODUITS

(30) Priority: 14.04.1994 SE 9401260
(43) Date of publication of application: 29.01.1997
(73) Proprietor: BEROL NOBEL AB, 444 85 Stenungsund (SE)
(72) Inventor: SAMUELSSON, Anne-Cathrine, S-463 94 Lilla Edet (SE)
(86) International application number: EP9501136
(87) International publication number: WO9528091

(56) References cited:
- EP-A- 0 197 188
- EP-A- 0 207 344
- WO-A-93/02680
- DE-A- 3 934 010
- US-A- 3 617 299
- CHEMICAL ABSTRACTS, vol. 121, no. 3, 18 July 1994 Columbus, Ohio, US; abstract no. 33830r, NAGASE, ATSUSHI ET AL. 'Manufacture of granules containing vitamins for feed' page 846; column 1; & JP,A,06 062 761 (NITSUSHIN BAADEISHE KK) 8 March 1994
- PATENT ABSTRACTS OF JAPAN vol. 15 no. 431 (C-0881) ,5 November 1991 & JP,A,03 181491 (NIPPON SAAFUAKUTANTO KOGYO KK) 7 August 1991,

## Description

This invention relates to a method for producing dry animal feed containing pulverulent or granular nutritious substances, in which a surface-active compound consisting of a glyceryl polyethelene glycol ricinoleate (usually referred to as castor oil ethoxylate) is mixed with the nutritious substances and not with a hydrophobic component which is in the liquid state, optionally after heating. The resulting animal feed has been found to have a higher nutritive value, e.g. for poultry, pigs and calves.

It is generally known to disperse fat in water with the aid of surface-active agents, such as castor oil ethoxylate and lecithin, in order to produce a formula primarily destined for calves. Further, it is known to incorporate surface-active compounds into pulverulent or granular feed based on cereals and fat by admixing them to a fatty phase which is in the liquid state, optionally after heating, so as to increase the availability of the nutritive value of the fat.

It is thus known, e.g. from a doctor's thesis by Christoph Günther entitled "Einfluss von Emulgatoren auf die Verwendung tierischen Fettes von Masthünerküken" at the Hohen Landwirtschaftlischen Fakultät der Reinischen Friedrich-Wilheims-Universität zu Bonn, 16 February 1988, to produce chickenfeed by mixing various nutritious substances, such as cereals and melted fat. Emulsifiers, such as soybean lecithin, sugar ester, polyoxyethylene glyceryl monostearate and mixtures of castor oil ethoxylate and soybean lecithin are added to the fat in order improve its digestibility.

From EP-A-197 188 and EP-A-207 344 it is also known to use nonionic surfactants and emulsifiers, like castor oil ethoxylate in order to hamper the formation of dust in connection with the preparation of animal feed mixtures.

An article entitled Growth Promotion in Broilers by Copolymer CRL 87-61' by J.P. Texton et al, J.APPL. Poultry Res. (1992)1, pp 373-381, discloses the addition of nonionic surface-active block copolymers of ethylene oxide and propylene oxide, for surface-active block copolymers of ethylene oxide and propylene oxide, for instance in contents of 10 ppm, to chicken-feed in an attempt at promoting the growth of chickens. According to this article, the surface-active copolymer was mixed first with a premix of maize meal and then with the other ingredients of the feed. When the chickens were fed with this feed, their growth increased somewhat and their mortality was reduced after 42 days, but not after 21 days. These results have, however, been called in question by William A. Duclley-Cash in an article published in Feed-stuffs, 1993, March 1, p. 13.

The object of this invention is to improve the availability of the nutritious substances in conventional dry animal feed, especially for poultry, pigs and calves, in order to increase the growth per weight unit of animal feed and/or the daily growth while reducing the mortality.

It has now surprisingly been found that this object can be attained in the production of animal feed by mixing a castor oil ethoxylate, optionally dissolved or suspended in water or sorbed by a carrier and containing 8-35 ethyleneoxy groups, preferably 18-30 ethyleneoxy groups, with the pulverulent or granular nutritious substances or other solid components of the animal feed. According to the invention, the amount of castor oil ethoxylate added usually is 50-3000 ppm, preferably 200-1500 ppm, based on the total weight of the animal feed. The castor oil ethoxylate thus is not introduced into the animal feed via a hydrophobic component which is in the liquid state, optionally after heating, and e.g. consists of a lipid, such as fat, and/or of a carboxylic acid, such as a natural fatty acid. Comparative tests have shown that the addition of castor oil ethoxylate to the liquid hydrophobic component results in the production of feed which does have a slightly higher nutritive value than it would have had if the castor oil ethoxylate had not been added. By mixing the castor oil ethoxylate with the cereals or other solid nutritious substances in accordance with the invention, the animals fed with the resulting feed show even better growth and lower mortality. If a liquid hydrophobic component, such as a lipid or a carboxylic acid, is added to the feed, this is done either before or after the admixture of castor oil ethoxylate to the pulverulent or granular nutritious substances or other solid components. If so desired, an additional amount of castor oil ethoxylate may, of course, be introduced separately into the hydrophobic component which is in the liquid state, optionally after heating. Although the reason for the surprising results of the invention is unknown, it would seem that the presence of castor oil ethoxylate outside the hydrophobic component increases the availability of the pulverulent or granular nutritious substances and facilitates the assimilation thereof.

When preparing the animal feed, one may conveniently prepare a premix consisting of e.g. vitamins, flavourings, minerals, enzymes, antibiotics and probiotics. To the premix, one may add dry components consisting of cereals, such as meal of wheat, oats, barley, maize and rice, or these cereals in the crushed state; vegetable protein feed based on e.g. rape, soy and sunflower; animal protein feed, such as protein E, blood meal, bone meal and fish meal; molasses; and milk products, such as various milk powders and whey powders. To this mixture or to the premix, one suitably adds the castor oil ethoxylate, optionally dissolved or emulsified in water or sorbed (i.e. adsorbed or absorbed) by a carrier, which may consist of ground cereals, starch or inorganic minerals, such as silicates. After mixing all the dry additives, one may add the hydrophobic component which is in the liquid state, optionally after heating, and which may consist of lipids, such as fat, and/or of carboxylic acids, such as fatty acid. The lipids usually consist of slaughter fat and vegetable fat, optionally liquified by heating. Thorough mixing results in a mealy or particulate composition, depending on the degree of grinding of the ingredients. If so desired, the liquid hydrophobic component may be added to the solid pulverulent or particulate components, or a part thereof, in order to produce a solid pulverulent mixture before adding the castor oil ethoxylate.

Animal feed according to the invention usually contains 0-80% by weight, preferably 10-70% by weight, of cereals; 0.15% by weight, preferably 0-10% by weight and most preferred 1-8% by weight, of feed fat; 0-70% by weight, preferably 10-50% by weight, of protein-containing nutritious substances other than cereals; and 0-12% by weight, preferably 1-10% by weight, of vitamins, minerals, enzymes, flavourings, antibiotics, probiotics and optionally other common animal-feed additives.

In order to prevent separation during storage, one should suitably add water to the animal feed and subject it to a conventional pelleting, expanding or extruding process. In the event that the animal feed contains an excess of water after the treatment, this water can be removed by drying. If deemed suitable, the resulting granular animal feed may be crushed to a smaller particle size.

The invention will now be further illustrated with the aid of a few Examples.

### Example 1

Two different sorts of chickenfeed according to the invention were produced by adding to 0.3 parts by weight of wheat bran 0.15 parts by weight of a castor oil ethoxylate (RO12), in which 1 mole of castor oil was ethoxylated with 12 mole of ethylene oxide. The wheat bran was then mixed with other ground cereals, meat meal, tapioca meal and a premix containing vitamins and minerals. Melted feed fat and molasses were then added to this dry mixture under agitation. Finally, a minor amount of water was added, and the chickenfeed was pelleted and dried.

Two comparative compositions, in which 0.15 parts by weight of the castor oil ethoxylate was admixed to, respectively, 3 and 5 parts by weight of melted feed fat, as well as two additional feed compositions to which no castor oil ethoxylate was added, were also produced. The different sorts of chickenfeed produced had the following composition.

**Table 1**

| Components | Components, parts by weight of feed | | | | | |
|---|---|---|---|---|---|---|
| | 1 | 2 | 3 | 4 | 5 | 6 |
| Crushed barley | 35.0 | 35.0 | 35.0 | 35.0 | 35.0 | 35.0 |
| Crushed wheat | 21.0 | 21.0 | - | 21.0 | 21.0 | - |
| Wheat bran+RO12 | - | - | 0.45 | - | - | 0.45 |
| Tapioca meal | 7.0 | 7.0 | 7.0 | 6.0 | 6.0 | 6.0 |
| Soybean meal | 24.0 | 24.0 | 24.0 | 24.0 | 24.0 | 24.0 |
| Meat meal | 5.0 | 5.0 | 5.0 | 5.0 | 5.0 | 5.0 |
| Feed fat | 3.0 | - | 3.0 | 5.0 | - | 5.0 |
| Feed fat+RO12 | - | 3.15 | - | - | 5.15 | - |
| Molasses | 3.0 | 3.0 | 3.0 | 2.0 | 2.0 | 2.0 |
| Premix | 2.0 | 2.0 | 2.0 | 2.0 | 2.0 | 2.0 |

Compositions 4-6 contained about 67% more feed fat than did compositions 1-3. Compositions 3 and 6 were produced in accordance with the invention. In compositions 2 and 5, on the other hand, the ethoxylated ricinoleate was added via the fat.

Then, 210 broilers distributed between 14 cages (15 animals in each) were fed per feed composition. The weight increase, the feed intake, the feed index (feed intake/weight increase) and the relative feed conversion of the broilers were determined. The following results were obtained.

**Table 2**

| **The Development of the Chickens** | | | | | | |
|---|---|---|---|---|---|---|
| | Composition | | | | | |
| | 1 | 2 | 3 | 4 | 5 | 6 |
| Initial weight | 39.5 | 39.0 | 39.0 | 39.5 | 40.0 | 39.0 |

| **After 20 days** | | | | | | |
|---|---|---|---|---|---|---|
| Weight, g | 771.5 | 812.0 | 840.0 | 795.8 | 826.5 | 871.7 |
| Increase, g | 732.0 | 773.0 | 801.0 | 756.3 | 786.5 | 832.7 |

| **After 40 days** | | | | | | |
|---|---|---|---|---|---|---|
| Weight, g | 1548.5 | 1635.6 | 1690.5 | 1606.4 | 1683.3 | 1704.4 |
| Increase, g | 1509.0 | 1596.6 | 1651.5 | 1566.9 | 1643.3 | 1747.8 |
| Increase/day,g | 37.7 | 39.9 | 41.3 | 39.2 | 41.1 | 43.7 |
| Rel. increase,% | 100.0 | 105.9 | 109.5 | 100.0 | 104.8 | 111.5 |

**Table 3**

| **Feed Intake and Feed** | | | | | | |
|---|---|---|---|---|---|---|
| | Composition | | | | | |
| | 1 | 2 | 3 | 4 | 5 | 6 |
| **0-20 days** | | | | | | |
| Growth, g | 732.0 | 773.0 | 801.0 | 756.3 | 786.5 | 832.7 |
| Feed intake, g | 1134.6 | 1128.6 | 1129.4 | 1119.3 | 1109.0 | 1132.5 |
| Feed index | 1.55 | 1.46 | 1.41 | 1.48 | 1.41 | 1.36 |
| Rel. feed consumption, % | 100.0 | 94.2 | 91.0 | 100.0 | 95.3 | 91.9 |

| **20-40 days** | | | | | | |
|---|---|---|---|---|---|---|
| Growth, g | 777.0 | 823.6 | 850.5 | 810.6 | 856.8 | 915.1 |
| Feed intake, g | 1657.0 | 1665.5 | 1678.1 | 1685.4 | 1701.0 | 1786.3 |
| Feed index | 2.13 | 2.02 | 1.97 | 2.08 | 1.98 | 1.95 |
| Rel. feed consumption, % | 100.0 | 94.8 | 92.5 | 100.0 | 95.2 | 93.8 |

| **0-40 days** | | | | | | |
|---|---|---|---|---|---|---|
| Growth, g | 1509.0 | 1596.6 | 1651.5 | 1566.9 | 1643.3 | 1747.8 |
| Feed intake, g | 2791.6 | 2794.1 | 2807.5 | 2804.7 | 2810.0 | 2918.8 |
| Feed index | 1.85 | 1.75 | 1.70 | 1.79 | 1.71 | 1.67 |
| Rel. feed consumption, % | 100.0 | 94.6 | 91.9 | 100.0 | 95.5 | 93.3 |

It is evident from these results that the animals fed with the feed produced in accordance with the invention showed better growth than those fed with the comparative feed. One further obtained a lower feed index, i.e. a lower feed intake per weight increase with the feed produced in accordance with the invention.

### Example 2

A feed composition corresponding to feed composition 6 in Example 1, as well as a composition in which the RO12 content had been reduced to 1,000 ppm, was produced. One further produced two compositions where RO12 was replaced with a castor oil ethoxylate (RO25), in which 1 mole of castor oil had been ethoxylated with 25 moles of ethylene oxide, and a castor oil ethoxylate (RO20), in which 1 mole of castor oil had been ethoxylated with 20 moles of ethylene oxide. For comparative purposes, a composition corresponding to composition 4 in Example 1 was also produced.

The different compositions were then fed to broilers as in Example 1. The following results were obtained.

**Table 4**

| Compositions | 1 | 2 | 3 | 4 | 5 |
|---|---|---|---|---|---|
| Ethoxylate | - | RO12 | RO12 | RO25 | RO20 |
| Content, ppm | - | 1500 | 1000 | 1000 | 1000 |

| **0-20 days** | | | | | |
|---|---|---|---|---|---|
| Growth, g | 536 | 626 | 603 | 628 | 613 |
| Feed intake, g | 847 | 945 | 923 | 1062 | 931 |
| Feed index | 1.58 | 1.51 | 1.53 | 1.48 | 1.52 |

| **0-40 days** | | | | | |
|---|---|---|---|---|---|
| Growth, g | 1652 | 1740 | 1704 | 1764 | 1719 |
| Feed intake, g | 3150 | 3150 | 3118 | 3087 | 3163 |
| Feed index | 1.91 | 1.81 | 1.83 | 1.75 | 1,84 |
| Growth, g/day | 41.3 | 43.5 | 42.6 | 44.1 | 43.0 |
| Mortality | 4.3 | 2.4 | 2.9 | 2.4 | 2.9 |

It is evident from these results that the broilers fed with the feed compositions containing castor oil ethoxylate showed better growth, better feed index and lower mortality than those that had been fed with the comparative composition.

### Example 3

Six feed compositions were produced in the same way as in Example 1 (composition 6), excepting that the ethoxylate RO12 was replaced with the following additives.

| Composition | Additive | Amount, ppm |
|---|---|---|
| 1 | - | - |
| 2 | RO25 | 1,000 |
| 3 | Mixture of mono- and di-C₁₆₋₁₈-alkylglyceride + 8 EO | 800 |
| 3 | Ethylene oxide/propylene oxide block polymer (Pluronic PE 6800) | 1,000 |
| 4 | Ethylene oxide/propylene oxide block polymer (Pluronic PE 6800) | 10 |
| 5 | RO25 | 100 |

The different compositions were then fed to broilers under the same conditions as in Example 1. The following results were obtained.

**Table 5**

| Composition | 1 | 2 | 3 | 4 | 5 | 6 |
|---|---|---|---|---|---|---|
| **0-20 days** | | | | | | |
| Growth, g | 529 | 622 | 544 | 516 | 526 | 563 |
| Feed intake, g | 815 | 914 | 843 | 810 | 810 | 861 |
| Feed index | 1.54 | 1.47 | 1.55 | 1.57 | 1.54 | 1.53 |

| **0-40 days** | | | | | | |
|---|---|---|---|---|---|---|
| Growth, g | 1640 | 1752 | 1659 | 1625 | 1633 | 1667 |
| Feed intake, g | 3100 | 3154 | 3152 | 3136 | 3086 | 3117 |
| Feed index | 1.89 | 1.80 | 1.90 | 1.93 | 1.89 | 1.87 |
| Mortality, % | 2.9 | 1.9 | 4.3 | 5.7 | 4.8 | 2.9 |

It is evident from these results that the addition of castor oil ethoxylate had a favourable effect on growth, mortality and feed index, whereas the additives in compositions 3, 4 and 5 only had an adverse effect on mortality and feed index. The castor oil ethoxylate RO25 had a favourable effect even at such a low content as 100 ppm.

### Example 4

A composition corresponding to composition 3 in Example 1 was produced by mixing all the components except the feed fat and the wheat bran with sorbed castor oil ethoxylate. The feed fat, which had been liquefied by heating, was then added to this feed mixture under agitation, so that the fat was finely divided and a dry particulate free-flowing feed mixture was obtained. Wheat bran with sorbed castor oil ethoxylate was then added to this mixture under agitation. Finally, a minor amount of water was added, and the chickenfeed was granulated and dried.

As in Example 1, chickens were fed with the feed composition, and their weight increase, feed intake, feed index and relative feed consumption were determined. The results obtained agreed very well with those obtained for composition 3 in Example 1 and were superior to those obtained for compositions 1 and 2 in the same Example.

## Claims

1. Use of castor oil ethoxylate containing 8-35 ethyleneoxy groups in order to improve the availability of the nutritious substances and to increase the daily growth and/or to reduce the mortality by mixing the ethoxylate with pulverulant and granular nutritious substances or other solid components of a granular animal feed.

2. Use in accordance with claim 1 in which the ethoxylate contains 18-30 ethylenoxy groups.

3. Use in accordance with claims 1 or 2 in which the amounts of the ethoxylate is 50-3000 ppm, preferably 200-1500 ppm, based on the total weight of the animal feed.

4. A method for producing pulverulent or granular animal feed containing a surface-active compound, **characterised by** introducing into the animal feed a castor oil ethoxylate, optionally dissolved or suspended in water or sorbed by a carrier and containing 8-35 ethylenoxy groups, by mixing it with the pulverulent or granular nutritious substances of the animal feed, or with other optional solid components thereof, and
i) adding to the mixture a hydrophobic, component which is in the liquid state, optionally after heating, after the castor oil ethoxylate has been mixed with the pulverulent or granular nutritious substances and the other optional solid components, or
ii) mixing a hydrophobic component which is in the liquid state, optionally after heating, with at least part of the pulverulent or granular nutritious substances or other optional solid components of the animal feed to form a dry, pulverulent or granular feed mixture before the castor oil ethoxylate is added.

5. A method as set forth in claim 4, **characterised by** using castor oil ethoxylate containing 18-30 ethyleneoxy groups.

6. A method as set forth in any one of claims 4-5, **characterised by** adding the castor oil ethoxylate in an amount of 50-3000 ppm, preferably 200-1500 ppm, based on the weight of the animal feed.

7. A method as set forth in any one of claims 4-6, **characterised by** using feed fat as the hydrophobic component.

8. Animal feed, **characterised in that** it has been produced according to the method set forth in any one of claims 4-7, and that it contains 10-70% by weight of cereals, 1-8% by weight of feed fat, 10-50% by weight of protein-containing nutritious substances other than cereals, and 1-10% by weight of vitamins, minerals, enzymes, flavourings, antibiotics, probiotics and other animal-feed additives.

9. The use of animal feed as set forth in claim 8 for feeding poultry, pigs or calves.

## Patentansprüche

1. Verwendung von Castoröl-Ethoxylat, das 8 - 35 Ethylenoxygruppen enthält, zur Verbesserung der Verfügbarkeit der Nährsubstanzen und zur Erhöhung des täglichen Wachstums und/oder der Verminderung der Sterblichkeit durch Mischen des Ethoxylats mit pulverförmigen und kornförmigen Nährsubstanzen oder anderen festen Komponenten eines kornförmigen Tierfutters.

2. Verwendung nach Anspruch 1, in welcher das Ethoxylat 18 - 30 Ethylenoxygruppen enthält.

3. Verwendung nach Anspruch 1 oder 2, in welcher die Menge des Ethoxylats 50 - 3000 ppm, vorzugsweise 200 - 1500 ppm, bezogen auf das Gesamtgewicht des Tierfutters, beträgt.

4. Verfahren zur Herstellung von pulverförmigem oder kornförmigem Tierfutter, das eine grenzflächenaktive Verbindung enthält, gekennzeichnet durch die Einführung in das Tierfutter eines Castoröl-Ethoxylats, gegebenenfalls gelöst oder suspendiert in Wasser oder durch einen Träger sorbiert und 8 - 35 Ethylenoxygruppen enthaltend, durch Mischen desselben mit den pulverförmigen oder kornförmigen Nährsubstanzen des Tierfutters oder mit anderen fakultativen festen Komponenten desselben und
i) Zugabe zu der Mischung einer hydrophoben Komponente, die sich im flüssigen Zustand befindet, gegebenenfalls nach Erwärmung, nach dem Mischen des Castoröl-Ethoxylats mit den pulverförmigen oder kornförmigen Nährsubstanzen und den anderen fakultativen festen Komponenten oder
ii) Mischen einer hydrophoben Komponente, die sich im flüssigen Zustand befindet, gegebenenfalls nach Erwärmung, mit zumindest einem Teil der pulverförmigen oder kornförmigen Nährsubstanzen oder anderen fakultativen festen Komponenten des Tierfutters unter Bildung einer trockenen, pulverförmigen oder kornförmigen Futtermischung vor der Zugabe des Castoröl-Ethoxylats.

5. Verfahren nach Anspruch 4, gekennzeichnet durch die Verwendung von Castoröl-Ethoxylat, das 18 - 30 Ethylenoxygruppen enthält.

6. Verfahren nach irgendeinem der Ansprüche 4 - 5, gekennzeichnet durch die Zugabe des Castoröl-Ethoxylats in einer Menge von 50 - 3000 ppm, vorzugsweise 200 - 1500 ppm, bezogen auf das Gewicht des Tierfutters.

7. Verfahren nach irgendeinem der Ansprüche 4 - 6, gekennzeichnet durch die Verwendung von Futterfett als hydrophobe Komponente.

8. Tierfutter, gekennzeichnet dadurch, daß es gemäß dem in irgendeinem der Ansprüche 4 - 7 angegebenen Verfahren hergestellt wurde und daß es 10 - 70 Gewichts-% Cerealien, 1 - 8 Gewichts-% Futterfett, 10 - 50 Gewichts-% Protein-haltige Nährsubstanzen, die von Cerealien verschieden sind, und 1 - 10 Gewichts-% Vitamine, Mineralien, Enzyme, Geschmacksstoffe, Antibiotika, Probiotika und andere Tierfutter-Additive enthält.

9. Verwendung von Tierfutter nach Anspruch 8 zum Füttern von Geflügel, Schweinen oder Kälbern.

## Revendications

1. Utilisation d'éthoxylate d'huile de ricin contenant 8 à 35 groupes éthylèneoxy afin d'améliorer la disponibilité des substances nutritives et d'augmenter la croissance quotidienne et/ou de réduire la mortalité, en mélangeant l'éthoxylate avec des substances nutritives pulvérulentes et granulaires ou d'autres constituants solides d'un aliment granulaire pour animaux.

2. Utilisation selon la revendication 1, dans laquelle l'éthoxylate contient 18 à 30 groupes éthylèneoxy.

3. Utilisation selon les revendications 1 ou 2, dans laquelle la quantité de l'éthoxylate est de 50 à 3000 ppm, de préférence de 200 à 1500 ppm, par rapport au poids total de l'aliment pour animaux.

4. Procédé pour produire un aliment pulvérulent ou granulaire pour animaux contenant un composé tensioactif, caractérisé par l'introduction, dans l'aliment pour animaux, d'un éthoxylate d'huile de ricin, éventuellement dissous ou en suspension dans de l'eau ou sorbé par un support et contenant 8 à 35 groupes éthylèneoxy, par mélange de celui-ci avec les substances nutritives pulvérulentes ou granulaires de l'aliment pour animaux, ou avec d'autres constituants solides facultatifs de celui-ci, et
i) addition au mélange d'un constituant hydrophobe qui est à l'état liquide, éventuellement après l'avoir chauffé, après avoir mélangé l'éthoxylate d'huile de ricin avec les substances nutritives pulvérulentes ou granulaires et les autres constituants solides éventuels, ou
ii) mélange d'un constituant hydrophobe qui est à l'état liquide, éventuellement après l'avoir chauffé, avec au moins une partie des substances nutritives pulvérulentes ou granulaires ou d'autres constituants solides facultatifs de l'aliment pour animaux pour former un mélange d'aliment pulvérulent ou granulaire sec avant d'ajouter l'éthoxylate d'huile de ricin.

5. Procédé selon la revendication 4, caractérisé par l'utilisation d'éthoxylate d'huile de ricin contenant 18 à 30 groupes éthylèneoxy.

6. Procédé selon l'une quelconque des revendications 4-5, caractérisé par l'addition de l'éthoxylate d'huile de ricin en une proportion de 50 à 3000 ppm, de préférence 200 à 1500 ppm, par rapport au poids de l'aliment pour animaux.

7. Procédé selon l'une quelconque des revendications 4-6, caractérisé par l'utilisation de graisse pour aliment en tant que constituant hydrophobe.

8. Aliment pour animaux, caractérisé en ce qu'il est produit d'après le procédé décrit dans l'une quelconque des revendications 4-7, et en ce qu'il contient 10 à 70 % en poids de céréales, 1 à 8 % en poids de graisse pour aliment, 10 à 50 % en poids de substances nutritives contenant des protéines autres que des céréales, et 1 à 10 % en poids de vitamines, minéraux, enzymes, aromatisants, antibiotiques, probiotiques et autres additifs d'aliments pour animaux.

9. Utilisation d'un aliment pour animaux tel que présenté dans la revendication 8 pour nourrir de la volaille, des porcs ou des veaux.
